# EUROPEAN PATENT APPLICATION

(11) **EP 0 963 088 A1**
(43) Date of publication of application: **08.12.1999**
(21) Application number: 98109966.6
(22) Date of filing: 02.06.1998
(51) Int. Cl.: H04M 1/00, H04M 19/02

(54) **Method and system for transmitting information through a telephone network**

(71) Applicant: Savery, Winsor T., 1700 Fribourg (CH)
(72) Inventor: Savery, Winsor T., 1700 Fribourg (CH)
(74) Representative: Kaminski, Susanne, Dr.

(57) **Abstract**

In a system for transmitting information through a telephone network, the sending device (2, 3) converts the information into a length of time of ringing. A transceiver (3) causes the receiving station (7) to ring for that length of time. The receiving station (7) determines the ringing time and converts it back to the information initially sent. The system enables data transmission avoiding costs for a telephone connection and is preferably applicable for truck fleet management.

## Description

The invention refers to a method and a system for transmitting information through a telephone network.

Telephone network systems communicating information from a calling unit to a receiving unit have been described in the art. U.S. patent No. 5,544,225 discloses a cellular telephone network transmitting data messages from a truck trailer to a central platform. The data comprises current position and status of the trucks of a fleet. The information is transmitted through the data channel of the cellular telephone network. The information is encoded into the mobile identification number or the electronic serial number of the cellular transmitter through altering identifiers currently not being used. At the platform the data is collected for further evaluation. A telephone call connection is already completed before the data message content is transmitted. The users will be charged with the costs for each telephone call connection.

U.S. patent no. 5,631,950 describes a telephone system where a calling party enters a message to be transmitted to a receiving party through a telephone link. The data is transmitted to the switching office as dialed digits and forwarded to the receiving party during ringing to control features provided thereat. According to U.S. patent no. 4,551,581 detailing the data transmission technique the data messages are sent during a silent interval between ringing signals employing frequency shift keying.

It is an object of the invention to provide a method for transmitting information through a telephone network that is free of charge for a telephone call connection.

It is another object of the invention to provide a system for transmitting information through a telephone network that is free of charge for a telephone call connection.

The foregoing objects are solved by a method for transmitting information from a first device to a second device through a telephone network comprising the steps of:
- converting the information into a length of time of ringing at the first device;
- causing the second device to ring during the length of time of ringing;
- the second device determining the length of time of ringing without interrupting the ringing and converting the length of time of ringing back into said information;
   and, respectively, by a system for transmitting information from a first device to a second device through a telephone network comprising:
- a transceiver coupled to the first device;
- first means arranged in the first device for converting said information into a length of time of ringing signal;
- said transceiver causing said second device through said telephone network to ring for said length of time of ringing;
- second means arranged in said second device for determining the length of time of said caused ringing without interrupting said caused ringing.

Preferred embodiments of the invention are provided in the dependent claims.

The features together with the advantages of the invention will be described in more detail in the appended drawings in which
- Fig. 1: shows a block diagramm of a system according to the invention,
- Fig. 2: shows how a direction is transmitted through various length of time of ringing for coarse and fine direction data, and
- Fig. 3: shows the transmission of the latitude of a position empolying various numbers of phone rings for coarse and fine latitude data.

According to the invention coded signals are sent for Location reports from a moving vehicle computer to a stationary computer by cellular phone transmission by utilizing the length of time that the sender programs the call to "ring" until it disconnects before the call has been completed, but long enough to leave the receiver with a number that delivers information in a coded form. There is no charge for this messaging system in the U.S. today.

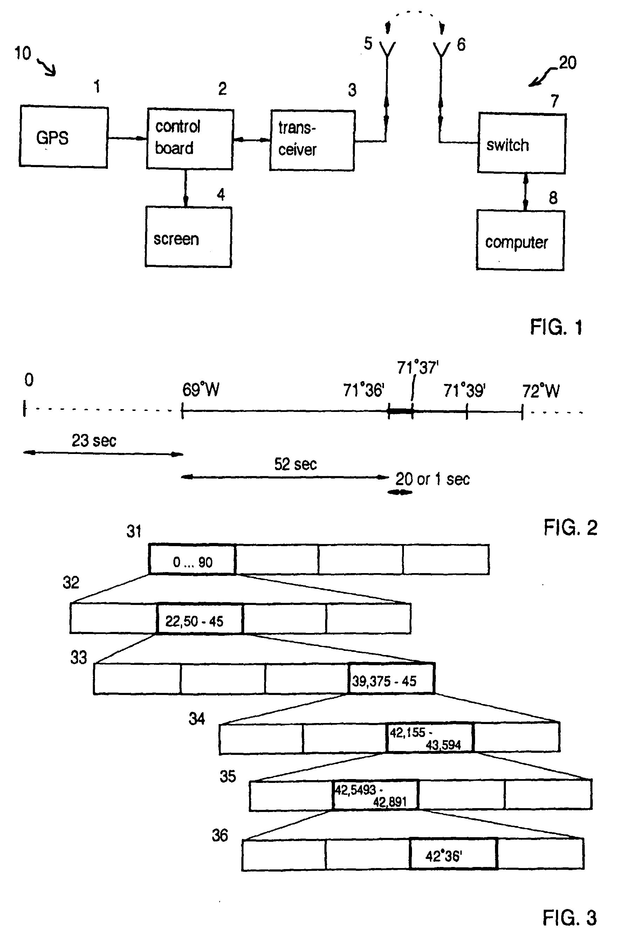

Fig. 1 depicts a system according to the invention for transmitting data from a first device 10 to a second device 20.

The data to be transmitted is the location of the first device 10. The system comprises a means 1 for location determination at the first device 10. The fist device 10 may be a vehicle. Preferably the position is determined with reasonable accuracy by a GPS receiver 1 (GPS - Global Positioning System). The GPS data is forwarded to a control board 2, e.g. an on-board computer, which controls the flow of data in the vehicle system. GPS data is then transmitted through a transceiver 3 and an antenna 5 via a cellular telephone network to a central station. The central station may belong to the owner of a fleet of vehicles who wants to monitor the vehicles. The stationary device contains a private telephone switch 7 connected to an antenna 6 for reception of the cellular phone signals sent from the various vehicles of the fleet. A computer 8 connected to the switch 7 provides for evaluation of the received information and for display of data. Switch 7, transceiver 8, and control board 2 are also designed to transmit information in the opposite direction from the central station to the vehicle. The data received is displayed on a vehicle based screen 4.

For example a truck has been moving at an average of 60 miles an hour for exactly one hour since it gave its last Location report. For purpose of this embodiment a computational device on the truck will use 1 second of ringing time for every 2 miles per hour that the truck has averaged since it last gave a Location report to the receiving computer. The computational device converts the information, e.g. 60 miles, into a length of time of ringing. Then the transceiver 3 causes the central station via the connection over the telephone network to ring for said length of time of ringing. In this case the truck "rings" the home office for 30 seconds to signal that it had been averaging 60 miles an hour. If the ringing had only been done for 15 seconds, it would have meant that the vehicle had averaged 30 miles per hour. A device at the cental station determines the length of time that it was caused to ring. It does not interrupt the ringing, otherwise a telephone call connection would be established and the connection would be charged by the telephone network operator. The central station comprises means to convert the detected length of time of ringing back into the information initally transmitted.

If the ringing had stopped immediately after making contact with the receiving computer, this would have signaled that the truck had been stopped. This constitutes a distance report.

The distance report signal will be set to begin at a preset time so that the receiving computer will know that the information being transmitted was sending out a distance report indicating the traveled distance rather than some other type of message such as a directional report explained below.

As an example, the distance traveled report will only be sent at some increments of exactly 3 minutes after the hour: for example at 2:03PM or 2:06PM or 2:15PM.

In order to complete the dead reckoning report to show the location of the vehicle, the vehicle also sends a signal to the office of the direction that it has moved in during the time interval from the last Location report. Typically, this Directional Report is issued immediately after the distance report. The combination of the Distance plus the Directional Reports provides the Location report.

In the example, if the truck has moved exactly 60 miles due east during exactly one hour from the last Location report, the vehicle's position can be accurately determined on a map. According to the invention the Direction Report is determined by making one second of ringing time equal to 6 degrees on a compass. This means that if the truck has moved due East, i.e. 90 degrees since the last Location report, the ring will be set at 15 seconds. The distance and the direction are converted into a length of time of ringing proportional to increments of a distance unit, e.g. 2 miles, and into a length of time of ringing proportional to increments of a predetermined number of degrees on a compass, e.g. 6 degrees. Because there is a 6 degree margin of error built in here, it will normally be necessary to ring back immediately after hanging up and concentrate the ringing to place the direction between 89 and 91 degrees East. In the embodiment this is equivalent to one second of ringing time being equal to 2 seconds on the compass. This means that if the true direction was 89 degrees and 20 seconds East, the ringing on the second ringing of the Direction Report would stop after exactly 10 seconds, which would leave the receiving computer with an accurate, but not yet perfect Directional Report, something that would not be possible with just one ringing. The complete data transmission is devided up into the transmission of a coarse information and the transmission of a fine information. The total data value transmitted is the sum of the coarse information and the fine information to be compiled at the receiving device. A report that is at least as accurate as the GPS accuracy which for the purpose of this document is perfect and will require additional narrowing of the compass.

Just as the distance report was set at 3 minutes after the hour, the Direction Report could be set at 5 minutes after the hour rather than immediately after the distance report. This means that the distance report and Direction Report are transmitted at increments of a time delay, e.g. 3 minutes or 5 minutes, resp., after a reference time which is given by a full hour.

Other items of information can be transmitted from the truck to the home office with this invention. Estimated time of arrivals (ETAs) can be transmitted by the driver who may know things about local road or weather conditions that would not be known in the office. This would be done by the driver typing in his estimate on an inexpensive data transmitter and then sending it out by the method described above as shown as follows: If the ETA is e.g. 4:36 PM, because this is the 1008th minute of the day (16 x 60 minutes plus 48 minutes), the ringing would stop at 41 seconds which would tell the receiving computer that the new ETA was between 4:24PM and 4:48PM. The ETA is transmitted as a length of time of ringing that is proportional to the number of repetitions of the predetermined time interval of 24 minutes relative to the reference time of 00:00AM. Because there is a 24 minute margin of error built into the transmission in order to get a closer reading on the time, it will be necessary to divide an hour into minutes where each minute of ring time is equal to one second of ringing time. This means that the next ringing time would be for just 12 seconds, and would deliver the message without cost, that the new ETA was 4:36PM. In general, any type of information can be encoded to length of time of ringing. When the coding method is kown at the receiving device, the information can easily be retrieved. The system and the method allows to transmit any information related to the status of the vehicle that contains the first device, e.g. load and variation of load of the truck, location of stops, current location in case of emergency or theft of the vehicle.

In addition, with this invention, the ringing process can be reversed from the office to the truck. In this way the office can call the truck at any time and send instructions by 'ringing time' which will vary according to the instructions. For example, a 10 second ring from the office could tell the vehicle to send the latest ETA, a 15 second ring could request a distance report request, and a 20 second ring could ask for an immediate position report with the mileage given first, followed by the direction. Thus, the desired sending of information from the vehicle to the central station is caused by the central station when sending a signal back to the vehicle, the length of time of ringing of the signal being associated to the type of information desired, e.g. distance report, direction report, or ETA.

As a further improvement on this invention, the message transmitter be able to control the ringing patterns through a switch that is owned by the sender. Through this mechanism elaborate codes could be sent without ever completing a call, by varying the periodicity of the volume, tone, and the length of the rings.

According to another embodiment the transmitter can also send a position as described below and illustrated in Fig. 2. The vehicle is e.g. at 71 degrees 37 minutes West (71°37′ W) and 41 degress 26 minutes North (71°26′ N). The transceiver of the vehicle first sends at a preset time or upon request a signal 23 seconds long to the central station and then "hangs up". This establishes the coarse location as being between 69 and 72 degrees West using 1 second ringing for 3 degrees (i.e. 3 to 1 ratio). It follows immediately with a 52 second ring, which with a ratio of 1 second ringing for 3 seconds on the compass narrows the latitudinal position to between 156 and 159 seconds after 69 minutes West which is between 71 degrees 36 seconds and 71 degrees 39 minutes West. The final stage in determining the fine resoluted latitudinal location is done by hanging up after 20 seconds, which is 1/3 of the time between 71 degrees 36 minutes West and 71 degrees 39 minutes West or one second can be used to signify 1/3, to shorten the ringing. If even more accurate positioning is desired, this process can be repeated as often as desired until it exceeds the GPS accuracy.

The process of transmitting longitude information can begin immediately after the transmission of latitude information is established and it can use the same method steps.

This procedure can be reversed if the home office wants the vehicle to go to a specific location it can display it on a map on a PC in the vehicle.

In yet another preferred embodiment of the invention the method of sending information with terminated calls is to substitute a number of phone rings for length of time of ringing. Especially in cellular phone networks the possible number of phone rings that can be transmitte consecutively is a maximum. Usually, the the ringing time is restricted to 4 to 6 rings in cellular telephone systems. The information to be transmitted will be divided up into various information items refining the accuracy. The range of values available for the information is divided up into a number of adjacent intervals, the maximum number of intervals being limited to the maximum number of phone rings to be performed consecutively. A number of phone rings is associated to each interval. The interval that contains the value to be transmitted is determined and the number of associated phone rings of that interval is transmitted. Next, the respective steps are performed within the interval having been determined just before providing an improved accuracy until the accuracy desired is achieved.

With reference to Fig. 3, as an example of this method in which only 4 rings are available for sending an information item, a vehicle is at 42°36′ W (42 degrees 36 seconds West) and 71°37′ N (71 degrees 37 seconds North). In order to signal which quadrant of the compass the vehicle is in, the signal for the first item of information to be transmitted at step 31 is one ring and the call attempt is immediately terminated after that ring. This tells the receiving computer at the central station that the vehicle is located in the first latitudinal quadrant of the compass (between 0 degrees North and 90 degrees North).

The second signal could be either at some preset time interval between rings, or the rings themselves. The intervals could be in 1/3 increments, which means that 3 signals could be sent during each ring. The maximum amount of intervals between rings will be used until the spacing interferes with accuracy. The closer the spacing, the fewer calls are required.

In this example, the second signal will narrow the location by another 75% by signalling that the latitude of the vehicle is in the second quadrant of the second latitudinal compass quadrant by "hanging" up, terminating the "attempted call", after the second ring, at step 32. This narrows the location information to somewhere between 22,50° North (expressed as a percentage) and 45° North.

The third ring or signal at step 34 will narrow the latitude location to the fourth quadrant of the third latitudinal quadrant, which is somewhere between between 39.375° (expressed as a percentage) which is 39°23′ North (when expressed in degrees and minutes) and 45° North.

The fourth signal (3 rings) at step 34 narrows the location to the third quadrant of the fourth latitudinal quadrant which is between 42.155° North and 43.594° North.

The fifth signal at step 35 (meaning that the "call attempt" has been terminated four times) will narrow the location to somewhere between 42.5395° and 42.891° North by "ringing" twice to signal the information that the vehicle is in the second quadrant of the fifth latitudinal quadrant.

Typically, because the approximate location of the vehicle will already be known, the signalling will usually begin at the third or fourth quadrant of the compass which is step 33 or 34 in the example.

In this example, the fifth latitudinal quadrant will position the vehicle between 42°32′ North and 42°53′ North. Just three more signals at step 36 will position the truck at approximately 42.36° North. More signals are not necessary because they would create greater accuracy than are available from the GPS equipment. As a general rule most of the time one ring can deliver the Location report. However, every time the vehicle moves from one zone to another it will notify the receiver PC.

After latitude is determined in this manner, longitude can be determined in the same way. Typically, 7 distance signals (terminated call attempts), will give the distance that the truck has travelled since the last hourly Location report (within 30-35 feet). Another 6 directional signals starting with the vehicle's known location quadrant will then give the direction that the vehicle has travelled within 30-35'. Analyzed together, the distance and directional informtion can determine the vehicle's location within 100 feet which is the limit of the GPS equipment.

An advantage of the system according to the invention is to provide a means whereby vehicles can be guided remotely from their home offices without having to speak or even complete a cellular phone call.

The system according to the invention allows a base computer at the central station to organize delivery and pick up routes and download them to a vehicle PC as the truck begins the route. The base computer has the latitude and longitude of every address in the drivers territory available. As the truck moves along on its route it updates the base computer with its current location. The monitor on the truck provides directional arrows to guide the truck. The base computer updates the estimated time of arrival.

The way that the system works is as follows: A signal is sent from the home office that describes the area that includes the destination of the vehicle and the location of the vehicle. This is displayed on a monitor in the vehicle and the detail increases as the vehicle gets closer to the destination. The system described above enables Location reports without having to complete a phone call.

This system is used to position indicators on a map in the vehicle. The system is modified so that the home office can send a signal to the vehicle computer that electronically calculates the boundaries of the map on the vehicle PC and displays both the current location and the destination on the monitor. If the first destination is changed the vehicle's driver is alerted and the new destination's coordinates are displayed immediately along with the suggested route.

According to a further aspect of the invention the vehicle only sends a Location report when it deviates from its original schedule by at least one hour or an equivalent of miles, e.g. 30 miles. As soon as the vehicle deviates from its original plan by some predetermined limit, an alarm will let the dispatcher know immediately with a PC map that superimposes the new route on the original route and time schedule.

The dispatcher can either call the driver or send a directive via a monitor in the vehicle with the new schedule. Another feature of this invention is that the driver gets the same message as the office which may cause him to change his direction or speed to conform to the original plan.

It is a further refinement of this invention that the timing of Location reports be synchronized so that the receiver always knows which vehicle is sending a report by the time that the report is received. In other words, if a location report is received at, say, 6 seconds after the 6th minute of the hour this can be the signal that truck 66 is calling. This is an improvement because it minimizes the amount of receiving phones that must be paid for. Also, without such a refinement Location reports would be blocking each other.

One simple way to start with a smaller territory when transmitting a location report is to utilize the identifying information as to the cell territory that is sent by the carriers in the cells. The identifying information is data transmitted from a calling telephone set to a called unit in form of an "automatic number identificatin" (ANI) that can be captured from a calling telephone number before a call is answered and even if it is not answered or in the form of "direct inward dialing" (DID) for callback which is captured before the called phone answers and even when there is no answer. This information allows the system to begin its search in a relatively small area, perhaps small enough to only require one initial report when the vehicle enters a new cell and after that, just one ANI or DID for every Location report. With the information on the cell, the central computer should be able to use these signals to locate the vehicle in the cell. When the vehicle moves into a new cell the meaning of each code ANI would change according to the prearranged coding system.

## Claims

1. A method for transmitting information from a first device (10) to a second device (20) through a telephone network comprising the steps of:
- converting the information into a length of time of ringing at the first device (10);
- causing the second device (20) to ring during the length of time of ringing;
- the second device (20) determining the length of time of ringing without interrupting the ringing and converting the length of time of ringing back into said information.

2. Method according to claim 1,
characterized in that the length of time of ringing is represented by the number of phone rings performed at the second device (20).

3. Method according to claim 1 or 2,
characterized in that by the first device (10) said information to be transmitted is divided into at least a portion of coarse information and a portion of fine information whereby the information to be transmitted is the sum of said at least portions of coarse and fine information, each one of said portions being transmitted from the first device to the second device in succession and being additively combined at the second device (20).

4. Method according to any of the preceding claims,
characterized in that said information representing a distance and a direction forming the location of a mobile first device (10), the distance being converted into a length of time of ringing proportional to increments of a distance unit, the direction being converted into a length of time of ringing proportional to increments of a predetermined number of degrees on a compass.

5. Method according to claim 4,
characterized in that a respective time delay being associated with the information representing the distance and the information representing the direction, each information being transmitted at increments of said respective time delay referenced to a predetermined time.

6. Method according to any of claims 1 to 3,
characterized in that said information comprising an estimated time of arrival, said estimated time of arrival being comprised in a time interval, said length of time of ringing being proportional to the number of repetitions of said predetermined time interval relative to a reference time.

7. Method according to any of the preceding claims,
characterized in that a length of time of ringing is associated to a desired transmission of information representing distance, direction, or estimated time of arrival or a combination thereof, said second device (20) causing said length of time of ringing at said first device (10) and said first device (10) transmitting the respective information to said second device (2).

8. Method according to claims 2 or 3 when referenced to claim 2,
characterized in that a possible number of phone rings to be transmitted consecutively being lower than or equal to a maximum number, said number of phone rings representing the information to be transmitted being determined by dividing up the range of values representing the information into a number of adjaced intervals depending on the maximum number of phone rings, associating a number to each interval, determining the interval containing the value of information to be transmitted, transmitting the number of phone rings associated to the determined interval, and repeating the steps of dividing, associating, determining and transmitting with respect to the interval determined during the step performed before until a desired accuracy is achieved.

9. Method according to claim 8,
characterized in that the information represents longitude and latitude forming the location of a mobile first device (10).

10. Method according to any claims 4 or 9,
characterized in that the transmission of a location information is initiated when the mobile first device (10) deviates from a predetermined location by a preset distance.

11. System for transmitting information from a first device to a second device through a telephone network comprising:
- a transceiver (3) coupled to the first device;
- first means (2) arranged in the first device (10) for converting said information into a length of time of ringing signal;
- said transceiver (3) causing said second device (20) through said telephone network to ring for said length of time of ringing;
- second means (7) arranged in said second device (20) for determining the length of time of said caused ringing without interrupting said caused ringing.

12. System according to claim 11,
characterized in that the first device (10) comprises means for converting the information in a number of phone rings, that the transceiver (3) causes said second device (20) to ring for said number of phone rings, and that the second device (20) comprises means (7) for determining the number of caused phone rings.

13. System according to claim 11 or 12,
characterized in that the first device (10) comprises means for dividing said information to be transmitted into at least a portion of coarse information and a portion of fine information whereby the information to be transmitted is the sum of said at least portions of coarse and fine information, and means for transmitting each one of said portions to the second device in succession and said second device (20) comprises means for additively combining the coarse and fine information received.

14. System according to any of the claims 11 to 13,
characterized in that said information representing a distance and a direction forming the location of a mobile first device (10), the first device comprises means for converting the distance into a length of time of ringing proportional to increments of a distance unit and for converting the direction into a length of time of ringing being proportional to increments of a predetermined number of degrees on a compass.

15. System according to claim 14,
characterized in that a respective time delay being associated with the information representing the distance and the information representing the direction, the first device (10) comprises means for transmitting each information at increments of said respective time delay referenced to a predetermined time.

16. System according to any of claims 11 to 14,
characterized in that said information comprising an estimated time of arrival, said estimated time of arrival being comprised in a time interval, said first device comprises means to provide said length of time of ringing proportional to the number of repetitions of said predetermined time interval relative to a reference time.

17. System according to any of the claims 11 to 16,
characterized in that a length of time of ringing is associated to a desired transmission of information representing distance, direction, or estimated time of arrival or a combination thereof, said second device (20) comprises means for causing to ring said first device for said length of time of ringing and said first device (10) comprises means for transmitting the respective information to said second device (20).

18. System according to claims 12 or 13 when referenced to claim 12,
characterized in that the second device (20) having a maximal number of phone rings to be received consecutively without opening or rejecting a telephone call connection, a possible number of phone rings to be transmitted consecutively being lower than or equal to a maximum number, the first device (10) comprising means for determining said number of phone rings representing the information to be transmitted by dividing up the range of values representing the information into a number of adjaced intervals depending on the maximum number of phone rings, associating a number to each interval, determining the interval containing the value of information to be transmitted, transmitting the number of phone rings associated to the determined interval, and repeating the steps of dividing, associating, determining and transmitting with respect to the interval determined during the step performed before until a desired accuracy is achieved.

19. System according to claim 18,
characterized in that said first device (10) comprises means for providing location information in forma of longitude and latitude.

20. Method according to any claims 14 or 19,
characterized in that said first device (10) initiates the transmission of a location information when the first device (10) deviates from a predetermined location by a preset distance.
